# EUROPÄISCHE PATENTANMELDUNG

(11) **EP 1 605 692 A1**
(43) Veröffentlichungstag der Anmeldung: **14.12.2005**
(21) Anmeldenummer: 05450099.6
(22) Anmeldetag: 02.06.2005
(51) Int. Cl.: H04N 5/30, H04N 5/33, G06K 9/00, G07C 9/00

(54) **Verfahren und Vorrichtung zur biometrischen Bildaufnahme**

(30) Priorität: 03.06.2004 AT 9612004
(71) Anmelder: x-pin.com GmbH, 1060 Wien (AT)
(72) Erfinder: Tentschert, Erich, 1190 Wien (AT); Scholze, Wolfgang, 3411 Scheiblingstein (AT)

(57) **Zusammenfassung**

Verfahren zur biometrischen Bildaufnahme eines Objekts, insbesondere Gesichts, im Infrarotbereich, wobei das Objekt im Wellenlängenbereich von 865 bis 895 nm bestrahlt wird, und zwar mit einer Infrarotleistung von 5 Watt bis 15 Watt unter einem Raumwinkel von maximal 30°, und sein Bild im Wellenlängenbereich von 865 bis 895 nm aufgenommen wird.

## Beschreibung

Die vorliegende Erfindung betrifft ein Verfahren und eine Vorrichtung zur biometrischen Bildaufnahme eines Objekts, insbesondere eines Gesichts, im Infrarotbereich.

Die Herstellung qualitativ hochwertiger Bildaufnahmen für biometrische Auswertungen, z.B. zu Zutrittskontrollzwecken, wird häufig von störenden Umgebungslichtquellen, wie der Sonneneinstrahlung, beeinträchtigt. Es wurde daher bereits vorgeschlagen, die Bildaufnahme im Infrarotbereich durchzuführen, doch unterliegen die bekannten Vorrichtungen und Verfahren auch dort störenden Einflüssen durch natürliche und künstliche Lichtquellen, welche teilweise auch im Infrarotbereich strahlen.

Die Erfindung setzt sich zum Ziel, die bekannten Verfahren und Vorrichtungen so weiter zu entwickeln, daß sie unempfindlich gegenüber störenden äußeren Lichteinflüssen sind.

Dieses Ziel wird in einem ersten Aspekt der Erfindung mit einem Verfahren zur biometrischen Bildaufnahme eines Objektes, insbesondere Gesichts, im Infrarotbereich erreicht, das sich dadurch auszeichnet, daß das Objekt im Wellenlängenbereich von 865 bis 895 nm bestrahlt wird, und zwar mit einer Infrarotleistung von 5 Watt bis 15 Watt unter einem Raumwinkel von maximal 30°, und sein Bild im Wellenlängenbereich von 865 bis 895 nm aufgenommen wird.

In einem zweiten Aspekt der Erfindung wird dieses Ziel mit einer Vorrichtung zur biometrischen Bildaufnahme eines Objekts, insbesondere Gesichts, im Infrarotbereich erreicht, die eine Infrarotquelle zur Beleuchtung des Objekts und eine Infrarotkamera zur Bildaufnahme des Objekts aufweist und sich dadurch auszeichnet, daß die Infrarotquelle im Wellenlängenbereich von 865 bis 895 nm strahlt und eine Infrarotleistung von 5 Watt bis 15 Watt über einen Raumwinkel von maximal 30° erzeugt, und daß die Infrarotkamera ein Bandpaßfilter mit einem Durchlaßbereich von 865 bis 895 nm aufweist.

Die Erfindung beruht auf der überraschenden Erkenntnis, daß eine Infrarotleistung von lediglich 5 bis 15 Watt in einem Wellenlängenbereich von 865 bis 895 nm, d.h. 880 nm ± 15nm völlig ausreichend ist, um eine von störenden äußeren Lichteinflüssen unbeeinträchtigte, qualitativ hochwertige Bildaufnahme für biometrische Zwecke anzufertigen. In diesem Bereich wird das aufgenommene Bild weitgehend von der vom Objekt reflektierten Infrarotleistung der Infrarotquelle bestimmt, sodaß Störeinflüsse durch externe Lichtquellen, insbesondere Sonnenlicht, vernachlässigbar sind. Dadurch kann in weiterer Folge die das Bild aufnehmende Infrarotkamera auch auf eine entsprechend hohe Ansprechschwelle gesetzt werden, so daß normaler Sonnenlichteinfall unter der Ansprechschwelle liegt und keinen Bildbeitrag liefert.

Gemäß einem weiteren bevorzugten Merkmal der Vorrichtung der Erfindung ist die Infrarotquelle ein Satz von Infrarot-Leuchtdioden mit einer Wellenlänge von 880 nm ± 15 nm. Infrarot-Leuchtdioden mit einer Nenn-Wellenlänge von 880 nm unterliegen häufig bereits einer Toleranzstreuung von ± 15nm, sodaß die Vorrichtung mit handelsüblichen Komponenten aufgebaut werden kann.

Bevorzugt ist das Bandpaßfilter eine im Objektiv der Infrarotkamera ausgebildete Filterscheibe, beispielsweise eine entsprechende Beschichtung des Objektivs.

Besonders vorteilhaft ist es, wenn gemäß einem weiteren Merkmal der Erfindung die Infrarotquelle rund um die Infrarotkamera verteilt angeordnet ist. Dadurch kann eine Schattenbildung am Rand der Aufnahme, z.B. ein Helligkeitsabfall am Gesichtsrand, verhindert werden.

Eine weitere bevorzugte Ausführungsform der Erfindung zeichnet sich dadurch aus, daß die Leuchtdichte der Infrarotquelle zu ihrem Rand hin zunimmt. Dadurch kann bei der Aufnahme eines Gesichts die durch die Gesichtsform bedingte Entfernungszunahme am Gesichtsrand kompensiert werden.

Auf besonders einfache und wirkungsvolle Art und Weise kann dies erreicht werden, indem die Infrarotquelle durch einen Satz von Leuchtdioden gebildet wird, von denen die innenliegenden geringere Leistung haben oder unter einem größeren Raumwinkel ausstrahlen als die außenliegenden.

In jedem Fall ist es besonders günstig, wenn die Infrarotquelle nur während der Bildaufnahme abstrahlt. Durch einen solchen Impulsbetrieb können beispielsweise Leuchtdioden mit maximaler Spitzenleistung betrieben werden, ohne ihre thermischen Grenzen zu überschreiten, bzw. ein Wärmestau im Gehäuse der Infrarotquelle vermieden werden.

Die Erfindung wird nachstehend anhand von in den Zeichnungen dargestellten Ausführungsbeispielen näher erläutert. In den Zeichnungen zeigt
Fig. 1 die geometrischen Strahlungsverhältnisse bei dem Verfahren und der Vorrichtung der Erfindung in einer schematischen Seitenansicht,
Fig. 2 die Vorrichtung der Erfindung in einer schematischen Seitenansicht ergänzt durch blockschaltbildlich dargestellte Komponenten, und
die Fig. 3a und 3b zwei alternative Ausführungsformen der Vorrichtung von Fig. 2 jeweils in einer Draufsicht vom Benutzer aus gesehen.

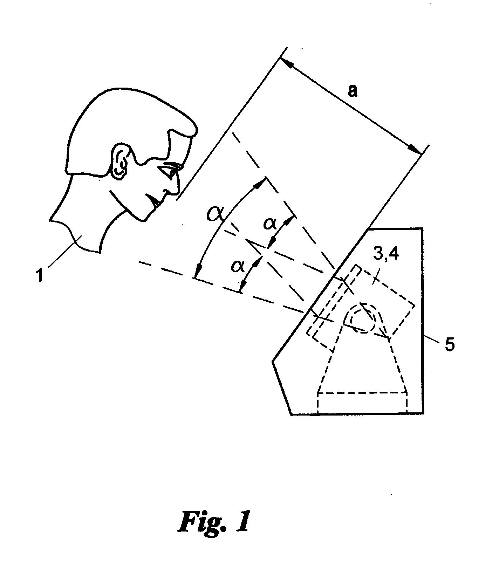

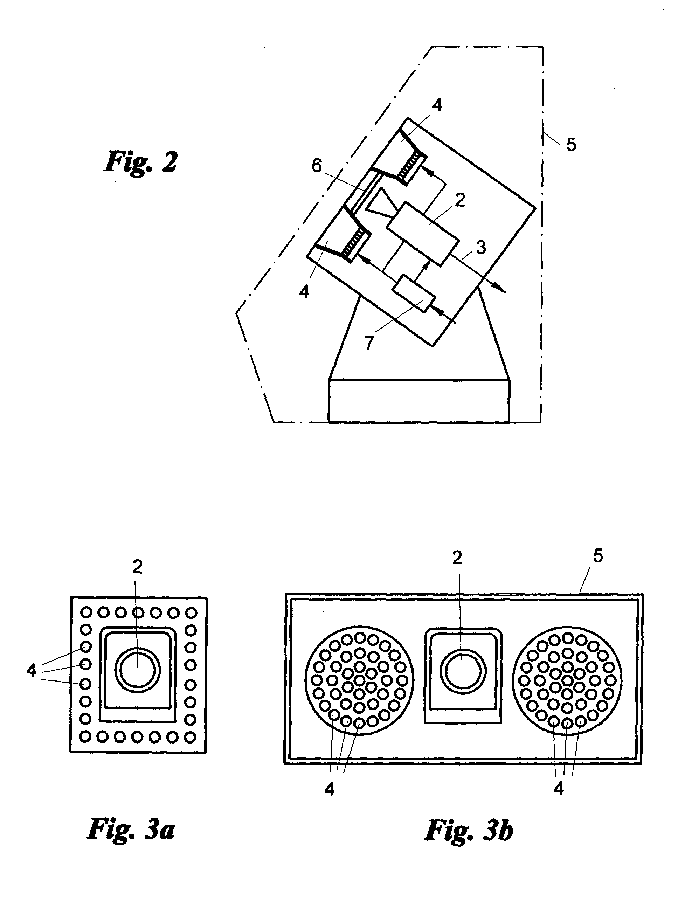

Es wird auf die Fig. 1 und 2 gemeinsam Bezug genommen. Ein Objekt 1, hier das Gesicht eines Benutzers, wird mittels einer Infrarotkamera 2 aufgenommen, um daraus biometrische Daten, z.B. für Authentifizierungszwecke, zu gewinnen. Das Ausgangssignal 3 der Infrarotkamera 2 wird dazu einer entsprechenden biometrischen Auswertungseinheit zugeführt, wie in der Technik bekannt.

Zur Beseitigung störender Umweltlichteinflüsse, z.B. Sonnenlicht, Raumbeleuchtung usw., wird das Objekt 1 mit einer Infrarotquelle 4 bestrahlt. Die Infrarotquelle 4 kann gemeinsam mit der Infrarotkamera 3 und weiteren Schaltungskomponenten in einem Gehäuse 5 angeordnet sein.

Die Infrarotquelle 4 strahlt unter einem Raumwinkel α von maximal 30° auf das Objekt 1, wobei der Abstand a zum Objekt 1 etwa 0,5 bis 1 m beträgt.

Die Infrarotquelle 4 sendet Infrarotlicht im Wellenlängenbereich oberhalb 865 nm, besonders bevorzugt im Wellenlängenbereich 880 nm ± 15nm. Die gesamte im Raumwinkel α abgestrahlte Infrarotleistung der Infrarotquelle 4 beträgt dabei mindestens 5 Watt, besonders bevorzugt höchstens 15 Watt.

Der Infrarotkamera 2 ist ein Hochpaßfilter, bevorzugt Bandpaßfilter, in Form einer Filterscheibe 6 vorgeordnet, welche beispielsweise durch eine Beschichtung des Objektivs gebildet sein kann. Das Hochpaßfilter läßt Infrarotlicht im Wellenlängenbereich oberhalb 865 nm durch; das bevorzugte Bandpaßfilter hat einen Durchlaßbereich von 880 nm ± 15nm.

Eine Steuerung 7 steuert die Infrarotquelle 4 so, daß diese bevorzugt nur während der Bildaufnahme der Infrarotkamera 2 eingeschaltet bzw. gespeist ist, um die Verlustleistung zu minimieren.

Fig. 3a zeigt eine erste Ausführungsform der Infrarotquelle 4 in Form einer Vielzahl einzelner Infrarot-Leuchtdioden, welche rund um die Infrarotkamera 2 verteilt angeordnet sind.

Fig. 3b zeigt eine zweite Ausführungsform der Infrarotquelle 4 in Form zweier Gruppen von Infrarot-Leuchtdioden, welche jeweils zu einem Scheinwerfer (power beamer) gebündelt und beidseits der Kamera 2 angeordnet sind. Alternativ können die zwei oder mehrere Gruppen auch oberhalb und unterhalb der Kamera 2 (siehe Fig. 2) oder rund um die Infrarotkamera 2 verteilt angeordnet sein.

Zur Gesichtsaufnahme ist es besonders günstig, wenn die Leuchtdichte der Infrarotquelle 4 zu ihrem Rand hin zunimmt. Wenn die Infrarotquelle 4 aus eine Gruppe von Leuchtdioden gebildet ist, kann dies bevorzugt dadurch erreicht werden, daß die in der Gruppe innenliegenden Leuchtdioden geringere Leistung haben als die in der Gruppe außenliegenden Leuchtdioden, oder daß die in der Gruppe innenliegenden Leuchtdioden unter einem größeren Raumwinkel α ausstrahlen als die in der Gruppe außenliegenden Leuchtdioden, z.B. unter bis zu 70° im Gegensatz zu den unter bis zu 30° ausstrahlenden außenliegenden Leuchtdioden.

Diese Varianten können sowohl bei der in Fig. 3a gezeigten Ausführungsform von rund um die Kamera 2 angeordneten Leuchtdioden vorgesehen werden, beispielsweise indem mehrere konzentrische Ringe bzw. Gruppen unterschiedlicher Leistung bzw. Abstrahlwinkel vorgesehen werden, als auch bei der in Fig. 3b gezeigten Ausführungsform von mehreren diskreten Schweinwerfer-Gruppen, welche jede für sich oder alle gemeinsam betrachtet in dieser Weise strukturiert sein können.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zur biometrischen Bildaufnahme eines Objekts, insbesondere Gesichts, im Infrarotbereich, **dadurch gekennzeichnet, daß** das Objekt im Wellenlängenbereich von 865 bis 895 nm bestrahlt wird, und zwar mit einer Infrarotleistung von 5 Watt bis 15 Watt unter einem Raumwinkel von maximal 30°, und sein Bild im Wellenlängenbereich von 865 bis 895 nm aufgenommen wird.

2. Vorrichtung zur biometrischen Bildaufnahme eines Objekts (1), insbesondere Gesichts, im Infrarotbereich, mit einer Infrarotquelle (4) zur Beleuchtung des Objekts und einer Infrarotkamera (2) zur Bildaufnahme des Objekts, **dadurch gekennzeichnet, daß** die Infrarotquelle (4) im Wellenlängenbereich von 865 bis 895 nm strahlt und eine Infrarotleistung von 5 Watt bis 15 Watt über einen Raumwinkel (α) von maximal 30° erzeugt, und daß die Infrarotkamera (2) ein Bandpaßfilter (6) mit einem Durchlaßbereich von 865 bis 895 nm aufweist.

3. Vorrichtung nach Anspruch 2, **dadurch gekennzeichnet, daß** die Infrarotquelle (4) ein Satz von Infrarot-Leuchtdioden mit einer Wellenlänge von 880 nm ± 15 nm ist.

4. Vorrichtung nach Anspruch 2 oder 3, **dadurch gekennzeichnet, daß** das Bandpaßfilter (6) eine im Objektiv der Infrarotkamera (2) ausgebildete Filterscheibe ist.

5. Vorrichtung nach einem der Ansprüche 2 bis 4, **dadurch gekennzeichnet, daß** die Infrarotquelle (4) rund um die Infrarotkamera (2) verteilt angeordnet ist.

6. Vorrichtung nach einem der Ansprüche 2 bis 5, **dadurch gekennzeichnet, daß** die Leuchtdichte der Infrarotquelle (4) zu ihrem Rand hin zunimmt.

7. Vorrichtung nach Anspruch 6, **dadurch gekennzeichnet, daß** die Infrarotquelle (4) durch einen Satz von Leuchtdioden gebildet ist, von denen die innenliegenden geringere Leistung haben oder unter einem größeren Raumwinkel (α) ausstrahlen als die außenliegenden.

8. Vorrichtung nach einem der Ansprüche 2 bis 7, **dadurch gekennzeichnet, daß** die Infrarotquelle (4) nur während der Bildaufnahme abstrahlt.
